# EUROPEAN PATENT APPLICATION

(11) **EP 2 261 192 A1**
(43) Date of publication of application: **15.12.2010**
(21) Application number: 08739522.4
(22) Date of filing: 31.03.2008
(51) Int. Cl.: C04B 35/478, B01D 39/20, B01J 35/04

(54) **PROCESS FOR PRODUCING HONEYCOMB STRUCTURE**

(71) Applicant: Ibiden Co., Ltd., Ogaki-shi, Gifu 503-8604 (JP)
(72) Inventor: OHNO, Kazushige, Ibi-gun Gifu 501-0695 (JP); YAMAYOSE, Kazunori, Ibi-gun Gifu 501-0695 (JP)
(74) Representative: HOFFMANN EITLE
(86) International application number: PCT/JP2008/056409
(87) International publication number: WO 2009/122535

(57) **Abstract**

An object of the present invention is to provide a method for manufacturing a honeycomb structured body mainly made of aluminum titanate and having high fracture strength. The method for manufacturing a honeycomb structured body of the present invention includes: a molding step for forming a pillar-shaped honeycomb molded body having a large number of cells provided in parallel with one another in a longitudinal direction by molding a wet mixture containing an aluminum titanate powdery material containing ratios of 40 to 60% by mass of Al₂O₃, 30 to 50% by mass of TiO₂, and 1 to 15% by mass of (MgO + SiO₂); and a firing step for firing the honeycomb molded body at a temperature of 1200°C to 1700°C.

## Description

### TECHNICAL FIELD

The present invention relates to a method for manufacturing a honeycomb structured body.

### BACKGROUND ART

Exhaust gas discharged from internal combustion engines such as a diesel engine contains particulate matter (hereinafter, also referred to as PM). In recent years, PM has raised serious problems because it is harmful to the environment and human body.
To overcome this problem, various filters for purifying exhaust gas have been developed in which a honeycomb structured body made of cordierite, silicon carbide, aluminum titanate or the like is used to capture PM in exhaust gas.

Honeycomb structured bodies made of aluminum titanate are thought to be highly heat resistant because, compared to honeycomb structured bodies made of cordierite, the honeycomb structured bodies made of aluminum titanate have a higher melting temperature and are less likely to melt upon burning of PM.
In addition, compared to honeycomb structured bodies made of silicon carbide, the honeycomb structured bodies made of aluminum titanate have a lower thermal expansion coefficient, and cracks caused due to thermal stress are less likely to occur in these honeycomb structured bodies. Therefore, these honeycomb structured bodies are thought to be highly resistant to thermal shock.
A method for manufacturing such a honeycomb structured body made of aluminum titanate as described above is disclosed in, for example, Patent Document 1.

Patent Document 1 discloses a method for manufacturing a honeycomb structured body in which alkali feldspar and MgO are added to a mixture containing TiO₂ and Al₂O₃ and the resulting mixture is fired to provide a honeycomb structured body mainly made of aluminum titanate.

Patent Document 1: JP-A 2005-87797

### DISCLOSURE OF THE INVENTION

### PROBLEMS TO BE SOLVED BY THE INVENTION

Patent Document 1 describes that honeycomb structured bodies that are mainly made of aluminum titanate and highly resistant to heat and thermal shock can be manufactured by the method for manufacturing a honeycomb structured body disclosed therein.
Patent Document 1 also describes that honeycomb structured bodies manufactured by the manufacturing method described in Patent Document 1 are highly resistant to thermal decomposition and have higher fracture strength owing to components of alkali feldspar and Mg derived from MgO.

However, the present inventors examined the method for manufacturing a honeycomb structured body described in Patent Document 1 to find a problem that it is difficult to stably manufacture honeycomb structured bodies with high fracture strength by the method.
In view of this problem, the present inventors further examined the method for manufacturing a honeycomb structured body described in Patent Document 1.

A plurality of honeycomb structured bodies were manufactured by the method for manufacturing a honeycomb structured body described in Patent Document 1. The obtained honeycomb structured bodies were assessed for pore diameter distribution.
The results revealed that some of the plurality of honeycomb structured bodies manufactured above had such a narrower pore diameter distribution that 60% or more of all pores had a pore diameter within the range of the average pore diameter ± 2 µm, and that other honeycomb structured bodies had such a wider pore diameter distribution that less than 60% of all pores had a pore diameter within the range of the average pore diameter ± 2 µm. Namely, the honeycomb structured bodies showed large variations in pore diameter distribution.
Thus, the present inventors revealed that it is difficult to stably manufacture honeycomb structured bodies having a specific pore diameter distribution by the method for manufacturing a honeycomb structured body described in Patent Document 1.
Difficulty in stably manufacturing honeycomb structured bodies having a specific pore diameter distribution is thought to be a reason for difficulty in stably manufacturing honeycomb structured bodies with high fracture strength.

The reason for such variations in pore diameter distribution of honeycomb structured bodies manufactured by the method for manufacturing a honeycomb structured body described in Patent Document 1 may be explained as follows.
In the method for manufacturing a honeycomb structured body described in Patent document 1, alkali feldspar, MgO and the like are added to a mixture containing TiO₂ and Al₂O₃, and the resulting mixture is molded and fired to provide a honeycomb structured body mainly made of aluminum titanate. In other words, the method for manufacturing a honeycomb structured body uses a reaction sintering process.

Such methods for manufacturing a honeycomb structured body using a reaction sintering process involve the reaction between TiO₂ and Al₂O₃. This reaction is thought to be a possible factor for difficulty in controlling the size of pores formed in cell walls of honeycomb structured bodies. For this reason, it would be difficult to stably manufacture honeycomb structured bodies having a desired pore diameter distribution by such a method for manufacturing a honeycomb structured body using a reaction sintering process.
Accordingly, it would be difficult to stably manufacture honeycomb structured bodies with high fracture strength by such a method for manufacturing a honeycomb structured body using a reaction sintering process.
From these facts, there is a demand for a technique capable of stably manufacturing honeycomb structured bodies with high fracture strength.

### MEANS FOR SOLVING THE PROBLEMS

In order to overcome the above-mentioned problems, the present inventors intensively studied and found out that it is possible to stably manufacture honeycomb structured bodies with high fraction strength by using a mixture containing an aluminum titanate powdery material having a specific composition as a raw material instead of a mixture containing TiO₂ and Al₂O₃. Thus, the present inventors completed the present invention.

A method for manufacturing a honeycomb structured body according to claim 1 comprises:
a molding step for forming a pillar-shaped honeycomb molded body having a large number of cells provided in parallel with one another in a longitudinal direction by molding a wet mixture containing an aluminum titanate powdery material containing ratios of 40 to 60% by mass of Al₂O₃, 30 to 50% by mass of TiO₂, and 1 to 15% by mass of (MgO + SiO₂); and
a firing step for firing the honeycomb molded body at a temperature of 1200°C to 1700°C.

In the method for manufacturing a honeycomb structured body according to claim 1, a honeycomb structured body is manufactured by forming a honeycomb molded body using a pre-prepared wet mixture containing an aluminum titanate powdery material having a specific composition and then firing the honeycomb molded body.
In this method for manufacturing a honeycomb structured body, the reaction between TiO₂ and Al₂O₃ is not involved in the firing step because a honeycomb molded body containing an aluminum titanate powdery material is fired. Therefore, it is possible to stably manufacture honeycomb structured bodies having a desired pore diameter distribution.
In the method for manufacturing a honeycomb structured body, an aluminum titanate powdery material having such a specific composition as described above is used as the above-mentioned aluminum titanate powdery material. Therefore, it is also possible to manufacture honeycomb structured bodies with high fracture strength.
Accordingly, it is possible to stably manufacture honeycomb structured bodies having high fracture strength as well as a desired pore diameter distribution by the method for manufacturing a honeycomb structured body according to claim 1.
In the method for manufacturing a honeycomb structured body according to claim 1, it is also possible to control the pore diameter of a honeycomb structured body to be manufactured, by adjusting the particle diameter of the aluminum titanate powdery material before preparation of the wet mixture containing the aluminum titanate powdery material.

In the method for manufacturing a honeycomb structured body according to claim 1, a honeycomb molded body is fired at a temperature of 1200°C to 1700°C.
Under this firing condition, particles are combined with each other, and the degree of shrinkage caused during the firing step is small. As a result, decomposition of aluminum titanate can be prevented. Honeycomb molded bodies fired at a temperature in the above-mentioned range are sufficiently but not excessively sintered, and thereby the resulting honeycomb structured bodies show smaller variations in pore diameter distribution.
Accordingly, it is possible to stably manufacture honeycomb structured bodies with high fracture strength by the method for manufacturing a honeycomb structured body of the present invention.
On the contrary, at a firing temperature of less than 1200°C, aluminum titanate may not be sufficiently sintered.
At a firing temperature of more than 1700°C, the degree of shrinkage caused during the firing step may be greater. As a result, the pore diameter may not be uniform. In addition, aluminum titanate may be decomposed.

In the method for manufacturing a honeycomb structured body according to claim 2, the aluminum titanate powdery material includes: a coarse powdery material of aluminum titanate having an average particle diameter of 3 to 50 µm; and a fine powdery material of aluminum titanate having an average particle diameter of 0.1 to 3 µm.

The use of two kinds of aluminum titanate powdery materials each having a different average particle diameter (a coarse powdery material of aluminum titanate and a fine powdery material of aluminum titanate) facilitates control of the pore diameter of honeycomb structured bodies.
Accordingly, the method for manufacturing a honeycomb structured body according to claim 2 is more suitable to stably manufacture honeycomb structured bodies with high fracture strength.

As used herein, a "fine powdery material of aluminum titanate" refers to a powdery material having an average particle diameter smaller than the average particle diameter of a coarse powdery material of aluminum titanate.
In the method for manufacturing a honeycomb structured body according to claim 2, if the average particle diameter of the coarse powdery material of aluminum titanate is 3 µm, the average particle diameter of the fine powdery material of aluminum titanate may be 0.1 µm or more and less than 3 µm.

The method for manufacturing a honeycomb structured body according to claim 3 further includes a sealing step including filling either one end of each cell of the honeycomb molded body with a plug material paste to seal the cells.
Since the sealing step is carried out in the method for manufacturing a honeycomb structured body according to claim 3, a honeycomb structured body manufactured by the method may be used as a filter for purifying exhaust gas.
In the method for manufacturing a honeycomb structured body according to claim 3, as described above, the pore diameter can be controlled. Therefore, it is possible to manufacture honeycomb structured bodies having pore diameters suitable to capture PM in exhaust gas with high PM capturing efficiency.

### BEST MODE FOR CARRYING OUT THE INVENTION

Hereinafter, a first embodiment, one embodiment of the present invention, is described.
First, a honeycomb structured body manufactured in the first embodiment is briefly described with reference to the figures.

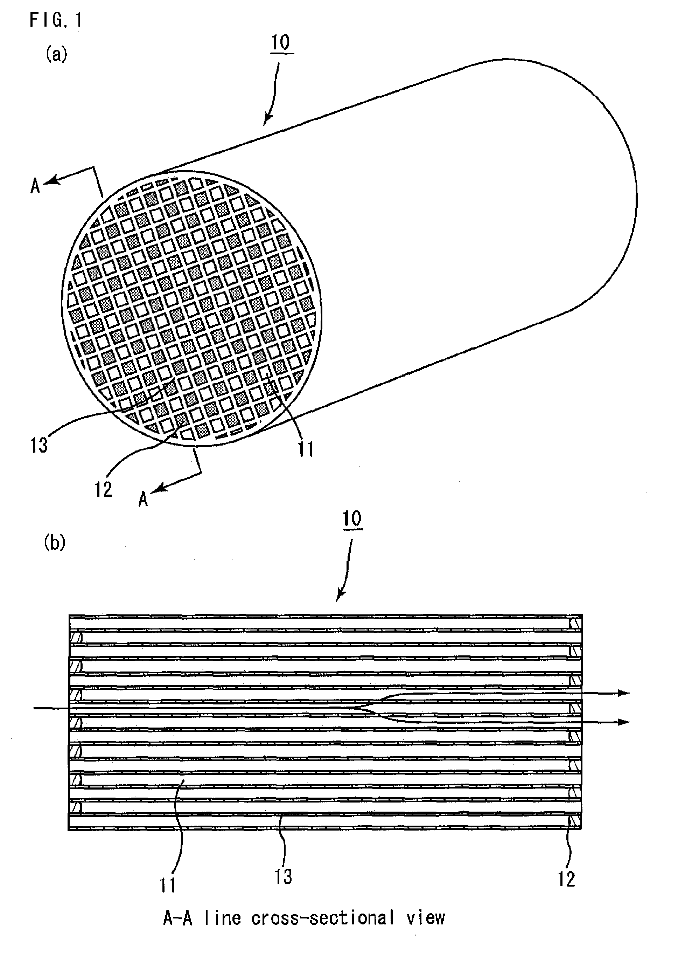

Fig. 1 (a) is a perspective view schematically illustrating a honeycomb structured body manufactured in the first embodiment of the present invention, and Fig. 1 (b) is an A-A line cross-sectional view of Fig. 1 (a).

A honeycomb structured body 10 shown in Fig. 1 (a) is made of aluminum titanate and has a cylindrical shape. As shown in Fig. 1 (b), a plurality of cells 11 are formed in the inside of the honeycomb structured body 10 along the longitudinal direction. Each cell 11 is separated by cell walls 13.
Either one end of each cell 11 is sealed with a plug 12.

The plugs 12 are formed with the same material as that of the honeycomb structured body 10, and the material is made of aluminum titanate. The honeycomb structured body 10 is sealed with the plugs 12 to prevent exhaust gas from leaking out of predetermined ends of the cells 11. In this structure, exhaust gas that flows into one cell (indicated by the arrow in Fig. 1(b)) positively passes through the cell wall 13 defining the cell and flows out of another cell. When exhaust gas passes through the cell wall 13, PM therein is captured in the inside of the cell wall 13 so that the exhaust gas is purified.

The method for manufacturing a honeycomb structured body of the present embodiment is described in order of steps.
(1) A wet mixture is prepared by mixing an aluminum titanate powdery material, a pore-forming agent, an organic binder, a plasticizer, a lubricant, and water, and sufficiently stirring the mixture.

The aluminum titanate powdery material contains ratios of 40 to 60% by mass of Al₂O₃, 30 to 50% by mass of TiO₂, and 1 to 15% by mass of (MgO + SiO₂).
The composition of the aluminum titanate powdery material is determined by ICP emission spectrochemical analysis.
In the ICP emission spectrochemical analysis, plasma energy is externally applied to an analysis sample to excite elements (atoms) in the sample, and emission lines (spectral lines) emitted when the excited atoms return to low energy levels are measured with respect to each wavelength of photons. Then, the component elements are identified based on the positions of the emission lines and quantified based on the intensity of the emission lines.

In the embodiment of the present invention, the ratios of the components of the aluminum titanate powdery material are determined to be in the above-mentioned ranges based on the following reasons.
If the ratios of Al₂O₃ and TiO₂ are out of the above-mentioned ranges, as a manufactured honeycomb structured body is repeatedly exposed to, for example, heat of exhaust gas in use, aluminum titanate is gradually decomposed into Al₂O₃ and TiO₂.
As a result, the honeycomb structured body will lose the characteristics and properties derived from aluminum titanate, which in turn leads to, for example, a reduction in the strength.

If the ratio of (MgO + SiO₂) is less than 1% by mass, as a manufactured honeycomb structured body is repeatedly exposed to, for example, heat of exhaust gas in use, aluminum titanate is gradually decomposed into Al₂O₃ and TiO₂.
If the ratio of (MgO + SiO₂) is more than 15% by mass, while a manufactured honeycomb structured body is repeatedly exposed to, for example, heat of exhaust gas in use, cracks may form due to thermal expansion.
The preferable lower limit of the ratio of (MgO + SiO₂) is 2.5% by mass. A ratio of 2.5% by mass or more of (MgO + SiO₂) contributes more to prevention of decomposition of aluminum titanate.

The aluminum titanate powdery material includes a coarse powdery material of aluminum titanate having an average particle diameter of 3 to 50 µm, and a fine powdery material of aluminum titanate having an average particle diameter of 0.1 to 3 µm.
The use of two kinds of aluminum titanate powdery materials each having a different average particle diameter (a coarse powdery material of aluminum titanate and a fine powdery material of aluminum titanate) facilitates control of the pore diameter of honeycomb structured bodies.

(2) The wet mixture is extrusion-molded by an extrusion-molding machine to provide a round pillar-shaped elongated honeycomb molded body having a large number of cells provided in parallel with one another in the longitudinal direction. Subsequently, the elongated honeycomb molded body is cut into a predetermined length by a cutting apparatus provided with a cutting disk as a cutting member to provide a honeycomb molding body of the predetermined length.

(3) The honeycomb molded body is dried using a microwave drying apparatus and a hot-air drying apparatus in air atmosphere at a temperature of 100°C to 150°C for 1 to 30 minutes.

(4) A predetermined end of each cell of the honeycomb molded body is filled with a plug material paste to seal either one end of each cell. The honeycomb molded body having cells with either one end filled with the plug material paste is dried again.
The plug material paste is a paste having the same composition as that of the wet mixture.

(5) The honeycomb molded body is degreased in a degreasing furnace in an atmosphere with an oxygen concentration from 5% by volume to that in air atmosphere at a temperature of 250°C to 400°C for 3 to 15 hours.
Subsequently, the honeycomb molded body is fired in a firing furnace at a temperature of 1200°C to 1700°C for 1 to 24 hours.
At a firing temperature in the above-mentioned range, particles are combined with each other, and the degree of shrinkage caused during the firing step is small. As a result, decomposition of aluminum titanate can be prevented. Under this condition, honeycomb molded bodies are sufficiently but not excessively sintered, and thereby the resulting honeycomb structured bodies show smaller variations in pore diameter distribution.
On the contrary, at a firing temperature of less than 1200°C, aluminum titanate may not be sufficiently sintered.
At a firing temperature of more than 1700°C, the degree of shrinkage caused during the firing step may be greater. As a result, the pore diameter may not be uniform. In addition, aluminum titanate may be decomposed.
Through such steps, the above-described honeycomb structured body 10 is manufactured.

The effects of the method for manufacturing a honeycomb structured body of the first embodiment are listed below.
(1) In the method for manufacturing a honeycomb structured body of the present embodiment, a honeycomb molded body is formed using a wet mixture containing an aluminum titanate powdery material, and thereby the reaction between TiO₂ and Al₂O₃ is not involved in the firing step for providing a honeycomb fired body. Therefore, it is possible to stably manufacture honeycomb structured bodies having a desired pore diameter distribution.

(2) In the method for manufacturing a honeycomb structured body of the present embodiment, since an aluminum titanate powdery material containing ratios of 40 to 60% by mass of Al₂O₃, 30 to 50% by mass of TiO₂, and 1 to 15% by mass of (MgO + SiO₂) is used as the aluminum titanate powdery material, honeycomb structured bodies to be manufactured have high fracture strength in which aluminum titanate is not decomposed and cracks caused due to thermal expansion do not occur.

(3) In the method for manufacturing a honeycomb structured body of the present embodiment, a honeycomb molded body is fired at a temperature of 1200°C to 1700°C. Under this firing condition, particles are combined with each other, and the degree of shrinkage caused during the firing step is small. As a result, decomposition of aluminum titanate can be prevented. In addition, honeycomb molded bodies are sufficiently sintered, and thereby the resulting honeycomb structured bodies show smaller variations in pore diameter distribution.

(4) In the method for manufacturing a honeycomb structured body of the present embodiment, the aluminum titanate powdery material includes a coarse powdery material of aluminum titanate having an average particle diameter of 3 to 50 µm, and a fine powdery material of aluminum titanate having an average particle diameter of 0.1 to 3 µm.
This facilitates control of the pore diameter of honeycomb structured bodies.

(5) In the method for manufacturing a honeycomb structured body of the present embodiment, the sealing step including filling either one end of each cell of the honeycomb molding body with a plug material paste to seal the cells is performed. Therefore, a manufactured honeycomb structured body may be used as a filter for purifying exhaust gas.

Hereinafter, examples are provided to specifically illustrate the first embodiment of the present invention. However, the present embodiment is not limited to these examples.
First, aluminum titanate powdery materials A to H each having a different composition were prepared.
The compositions of the aluminum titanate powdery materials A to H are shown in Table 1.

With reference to the compositions of the aluminum titanate powdery materials A to H shown in Table 1, the sums of the ratios of the components do not reach 100% by mass. This is because these aluminum titanate powdery materials contain contaminants.
Examples of the contaminants include substances derived from alkali feldspar (K₂O, Na₂O, etc.), iron compounds that contaminated the powdery materials while the aluminum titanate powdery materials were ground or mixed, substances originally contained in Al₂O₃ powder or TiO₂ powder, which are the raw materials of the aluminum titanate powdery materials, and the like.

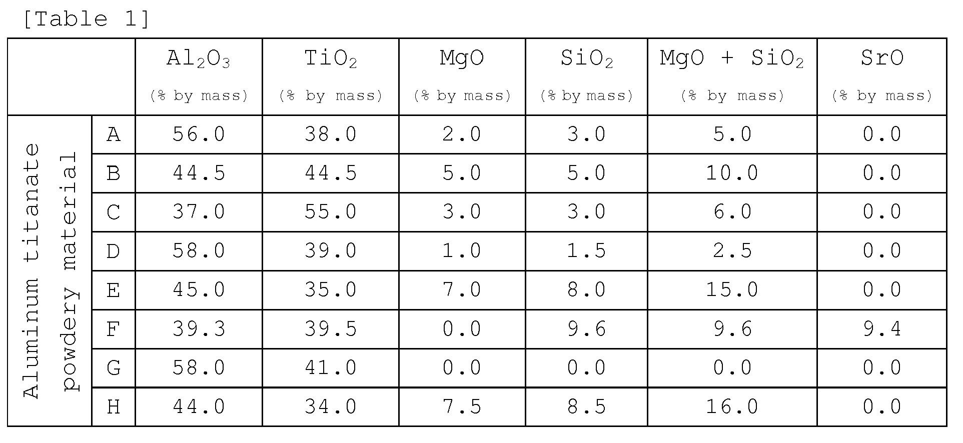

Then, a classification process was carried out on each aluminum titanate powdery material to provide a coarse powdery material of aluminum titanate having an average particle diameter adjusted to 20 µm, and a fine powdery material of aluminum titanate having an average particle diameter adjusted to 0.5 µm.

### (Example 1)

(1) An amount of 2000 parts by weight of the coarse powdery material of aluminum titanate A, 500 parts by weight of the fine powdery material of aluminum titanate A, 300 parts by weight of a pore-forming agent (spherical acrylic particles), 188 parts by weight of an organic binder (methyl cellulose), 96 parts by weight of a plasticizer (UNILUB, manufactured by NOF Corporation), 44 parts by weight of a lubricant (glycerin), and 725 parts by weight of water were mixed and sufficiently stirred to provide a wet mixture.
The used pore-forming agent had an average particle diameter of 20 µm and a particle diameter distribution of 1.8.

(2) The wet mixture was charged into a cylinder from a mixture tank of a plunger-type extrusion-molding machine, and a piston was pressed toward the die side so that the wet mixture was extruded through a round pillar-shaped die. Thus, a round pillar-shaped elongated honeycomb molded body including aluminum titanate was manufactured. In the elongated honeycomb molded body, a large number of cells were provided in parallel with one another in the longitudinal direction with a cell wall interposed therebetween.

(3) The elongated honeycomb molded body was cut by a cutting apparatus provided with a cutting disk as a cutting member. Thus, a round-pillar shaped honeycomb molded body made of aluminum titanate was obtained.

(4) The honeycomb molded body was dried by a microwave drying apparatus and a hot-air drying apparatus in air atmosphere at 120°C for 20 minutes to remove moisture contained in the honeycomb molded body.

(5) After the drying step, predetermined cells of the honeycomb molded body were filled with a plug material paste having the same composition as that of the wet mixture prepared in the step (1) so that either one end of each cell of the honeycomb molded body was filled with the plug material paste.

(6) The honeycomb molding body filled with the plug material paste was dried again in air atmosphere at 120°C for 10 minutes. Subsequently, the honeycomb molded body was degreased in a degreasing furnace at 300°C for 12 hours in an atmosphere with an oxygen concentration of 6% by volume.

(7) The degreased honeycomb molded body was fired in a firing furnace at 1500°C for 15 hours.
Through the steps (1) to (7), a honeycomb structured body made of aluminum titanate was manufactured. The honeycomb structured body had cells along the longitudinal direction with a wall thickness of 0.25 mm at a cell density of 46.5 pcs/cm², and had a diameter of 143.8 mm and a longitudinal length of 150 mm.
In Example 1, in total ten honeycomb structured bodies were manufactured.

The average pore diameter of the honeycomb structured bodies manufactured in Example 1 was 15 µm, and the average porosity was 40%. The average pore diameter and the average porosity were measured by mercury porosimetry.
In all the ten honeycomb structured bodies manufactured in Example 1, 60% or more of all pores had a diameter within the range of the average porosity ± 2 µm.

### (Examples 2 to 5, Comparative Examples 1 to 3)

In total ten honeycomb structured bodies were manufactured in each example in the same manner as in Example 1, except that one of the aluminum titanate powdery materials B to H was used instead of the aluminum titanate powdery material A.
The aluminum titanate powdery materials used in Examples and Comparative Examples are shown in Table 2. Table 2 also shows the average pore diameter and the average porosity of the honeycomb structured bodies manufactured in Examples 2 to 5 and Comparative Examples 1 to 3.
In all the ten honeycomb structured bodies manufactured in each of Examples 2 to 5 and Comparative Examples 1 to 3, 60% or more of all pores had a diameter within the range of the average porosity ± 2 µm.

**[Table 2]**

| | Aluminum titanate powdery material | Average pore diameter (µm) | Average porosity (%) |
|---|---|---|---|
| Example 2 | B | 15 | 40 |
| Example 3 | C | 15 | 40 |
| Example 4 | D | 15 | 40 |
| Example 5 | E | 15 | 40 |
| Comparative Example 1 | F | 15 | 40 |
| Comparative Example 2 | G | 15 | 40 |
| Comparative Example 3 | H | 15 | 40 |

### (Evaluation of Honeycomb Structured Body)

A regenerating treatment was carried out 10 times on the honeycomb structured bodies manufactured in Example 1 to 5 and Comparative Example 1 to 3 in the following manner, and then each honeycomb structured body was measured for fracture strength in the following manner.

### (Regenerating Process)

Each of the honeycomb structured bodies manufactured in Examples and Comparative Examples was placed in an exhaust passage of a 2L engine, and a commercially available catalyst supporting carrier including a honeycomb structured body made of cordierite (diameter: 200 mm, length: 100 mm, cell density: 400 pcs/inch², supported platinum amount: 5 g/L) was placed in the exhaust passage of the engine at a position closer to a gas-inlet side than the previously-placed honeycomb structured body as an exhaust gas purifying apparatus. Particulates were captured for 7 hours while the engine was driven at the number of revolutions of 3000 min⁻¹ with a torque of 50 Nm. The amount of the captured particulates was 8 g/L.
Thereafter, the engine was driven at the number of revolutions of 1250 min⁻¹ with a torque of 60 Nm. After the temperature of the filter became constant, this state was kept for 1 minute. Subsequently, a post injection was performed, and then the temperature of exhaust gas was raised by utilizing the oxidation catalyst present at the front side of the exhaust gas purifying apparatus to burn particulates.
The conditions for the post injection were set so that the temperature of exhaust gas flowing in the honeycomb structured body became almost constant at 600°C after 1 minute from the start.

### (Measurement of Fracture Strength)

A 34.3 mm square sample piece with a length of 150 mm was cut out from each honeycomb structured body after the regenerating process was repeated 10 times. A three-point bending test was carried out under the conditions of a bending span distance of 130 mm and a bending speed of 0.5 mm/min by INSTRON 5582 in accordance with JIS R 1601 to determine the bending strength of the honeycomb structured bodies of Examples and Comparative Examples.
Table 3 shows the results.

**[Table 3]**

| | Strength after regenerating process (MPa) |
|---|---|
| Example 1 | 6.6 |
| Example 2 | 6.4 |
| Example 3 | 6.4 |
| Example 4 | 6.0 |
| Example 5 | 5.6 |
| Comparative Example 1 | 3.0 |
| Comparative Example 2 | 2.6 |
| Comparative Example 3 | 3.8 |

As clearly shown by the results in Table 3, it is possible to manufacture honeycomb structured bodies with high fracture strength by using an aluminum titanate powdery material containing ratios of 40 to 60% by mass of Al₂O₃, 30 to 50% by mass of TiO₂, and 1 to 15% by mass of (MgO + SiO₂) as in Examples 1 to 5.
On the contrary, it is clear that honeycomb structured bodies manufactured using an aluminum titanate powdery material containing a ratio of less than 40% by mass of Al₂O₃ as in Comparative Example 1 are low in bending strength, which is determined in the above-mentioned manner, and that such honeycomb structured bodies have poor fracture strength. In the honeycomb structured bodies of Comparative Example 1, portion of aluminum titanate was decomposed into Al₂O₃ and TiO₂ through the regenerating process 10 times. Decomposition of aluminum titanate is thought to be a cause for the reduction in the strength of the honeycomb structured bodies.

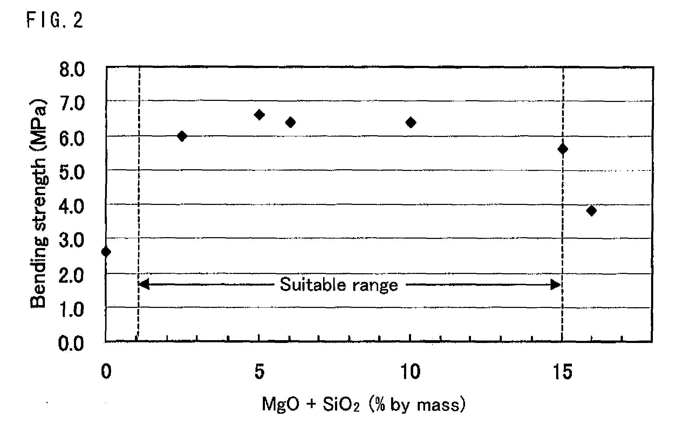

Fig. 2 is a graph illustrating the relationship between the ratio of (MgO + SiO₂) in the aluminum titanate powdery materials and the bending strength of the honeycomb structured bodies manufactured in Examples 1 to 5 and Comparative Examples 2 and 3.
As clearly shown by the results in Table 3 and Fig. 2, it is possible to manufacture honeycomb structured bodies with high fracture strength by using an aluminum titanate powdery material containing ratios of 40 to 60% by mass of Al₂O₃, 30 to 50% by mass of TiO₂, and 1 to 15% by mass of (MgO + SiO₂).
On the contrary, it is clear that honeycomb structured bodies manufactured using an aluminum titanate powdery material containing a ratio of less than 1% by mass of (MgO + SiO₂) as in Comparative Example 2 are low in bending strength, which is determined in the above-mentioned manner, and that such honeycomb structured bodies have poor fracture strength. In the honeycomb structured bodies of Comparative Example 2, portion of aluminum titanate was decomposed into Al₂O₃ and TiO₂ through the regenerating process 10 times. Decomposition of aluminum titanate is thought to be a cause for the reduction in the strength of the honeycomb structured bodies.
It is also clear that honeycomb structured bodies manufactured using an aluminum titanate powdery material containing a ratio of more than 15% by mass of (MgO + SiO₂) as in Comparative Example 3 are low in bending strength, which is determined in the above-mentioned manner, and that such honeycomb structured bodies have poor fracture strength. In some of the honeycomb structured bodies of Comparative Example 3, cracks were observed after the regenerating process was performed 10 times. Thermal expansion of these honeycomb structured bodies was caused in the regenerating process, which might result in occurrence of cracks in the honeycomb structured bodies.
As clearly shown by the results of Examples and Comparative Examples, the total amount of MgO and SiO₂ in the aluminum titanate powdery material is preferably 2.5% by mass or more.

### (Other Embodiments)

In the method for manufacturing a honeycomb structured body of the embodiments of the present invention, the aluminum titanate powdery material may not necessarily include a fine powdery material of aluminum titanate and a coarse powdery material of aluminum titanate, and only an aluminum titanate powdery material having one kind of average particle diameter may be used.

In the method for manufacturing a honeycomb structured body of the embodiments of the present invention, if the aluminum titanate powdery material includes a fine powdery material of aluminum titanate and a coarse powdery material of aluminum titanate, the blending ratio of the fine powdery material of aluminum titanate and the coarse powdery material of aluminum titanate is preferably (9:1) to (6:4).
The use of them in a blending ratio within the above-mentioned ranges results in prevention of size reduction of a honeycomb molded body caused by shrinkage during the firing step, and makes it possible to control the average pore diameter, the pore distribution and the porosity.

In the method for manufacturing a honeycomb structured body of the embodiments of the present invention, the firing time for firing a honeycomb molded body is preferably 1 to 24 hours.
Firing for less than 1 hour may not be enough to fire a honeycomb molded body. Firing for more than 24 hours, however, may cause a high degree of shrinkage through the firing step.

An organic binder used for preparation of the wet mixture is not particularly limited, and examples thereof include methylcellulose, carboxy methylcellulose, hydroxy ethylcellulose, polyethylene glycol, and the like.

### Methylcellulose is desirable among these.

The desirable blending amount of the organic binder is typically 1 to 10 parts by weight with respect to 100 parts by weight of the aluminum titanate powdery material.

A plasticizer and a lubricant used for preparation of the wet mixture are not particularly limited. Examples of the plasticizer include glycerin and the like, and examples of the lubricant include polyoxyalkylene compounds such as polyoxyethylene alkyl ethers and polyoxypropylene alkyl ethers, and the like.
Specific examples of the lubricant include polyoxyethylene monobutyl ether, polyoxypropylene monobutyl ether, and the like.
Moreover, the plasticizer and the lubricant may not be contained in the wet mixture in some cases.

A pore-forming agent used for preparation of the wet mixture is not particularly limited, and examples thereof include spherical acrylic particles, graphite and the like.
The pore-forming agent may not be contained in the wet mixture in some cases.

In addition, a dispersant solution other than water may be used for preparation of the wet mixture, and examples of the dispersant solution include alcohols such as methanol, organic solvents such as benzene and toluene, and the like.
Furthermore, a molding auxiliary may be contained in the wet mixture.
The molding auxiliary is not particularly limited, and examples thereof include ethylene glycol, dextrin, fatty acids, fatty acid soaps, polyalcohols, and the like.

In the method for manufacturing a honeycomb structured body of the embodiments of the present invention, when molded to form a honeycomb molded body, the wet mixture preferably has a temperature of 10°C or less. An excessively high temperature of the wet mixture may cause gelation of the organic binder.

In the method for manufacturing a honeycomb structured body of the embodiments of the present invention, the plug material paste used to seal cells is not particularly limited, a plug material paste to form, through the post-processes, a plug having a porosity of 40 to 50% is preferably used. For example, the same paste as the wet mixture may be used.

In the method for manufacturing a honeycomb structured body of the embodiments of the present invention, an apparatus used to form an elongated honeycomb molded body by extrusion-molding is not particularly limited, and examples thereof include a single-screw-type extrusion-molding machine, a multi-screw-type extrusion-molding machine, a plunger-type extrusion-molding machine, and the like. In particular, the plunger-type extrusion-molding machine is suitably used among these.

In the method for manufacturing a honeycomb structured body of the embodiments of the present invention, driers used to dry a honeycomb molded body are not particularly limited, and examples thereof include a microwave heat drying apparatus, a hot-air drying apparatus, an infrared ray drying apparatus, and the like. Any of these may be used alone, or two or more of these may be used in combination.

The cross-sectional shape of a honeycomb structured body manufactured in the embodiments of the present invention, which is perpendicular to the longitudinal direction, is not particularly limited to a round shape, and various shapes such as a rectangular shape may be used; however, it is preferable to use a shape enclosed only by a curved line or by curved lines and straight lines.
In addition to a round shape, specific examples thereof include a cylindroid shape, an elongated round shape, a racetrack shape, a shape in which one portion of a simple closed curved line such as a cylindroid shape or an elongated round shape has a recess portion (concave shape), and the like.

The aperture ratio of a honeycomb structured body manufactured in the embodiments of the present invention preferably has a lower limit of 50% and an upper limit of 75%.
An aperture ratio of less than 50% may cause large pressure loss between the exhaust gas inlet and the exhaust gas outlet in a honeycomb structured body. A honeycomb structured body having an aperture ratio of more than 75% may have low strength.

In a honeycomb structured body manufactured in the embodiments of the present invention, the lower limit of the thickness of the cell wall is preferably 0.15 mm. A honeycomb structured body having a cell wall with a thickness of less than 0.15 mm may have low strength.
The preferable upper limit of the thickness of the cell wall is 0.4 mm. A cell wall with a thickness of more than 0.4 mm leads to an excessively small aperture ratio and/or filtering area, and thereby may cause a large pressure loss.

The cell density of a honeycomb structured body manufactured in the embodiments of the present invention is not particularly limited. The preferable lower limit thereof is 23.3 pcs/ cm² (150 pcs/in²), the upper preferable limit is 93.0 pcs/cm² (600 pcs/in²), and the more preferable lower limit is 31 pcs/ cm² (200 pcs/in²) and the more preferable upper limit is 77.5 pcs/ cm² (500.0 pcs/in²).

Here, the shape of the above-mentioned cells in a plan view is not particularly limited to a square shape, and any desired shape such as a triangular shape, a hexagonal shape, an octagonal shape, a dodecagonal shape, a round shape, an elliptical shape and a star shape may be used.

The honeycomb structured body may have a catalyst supported thereon, if necessary. The catalyst supported on the honeycomb structured body is not particularly limited, and example thereof include noble metals, alkaline metals, alkaline-earth metals, metal oxides, and the like. Any of these may be used alone, or two or more of these may be used in combination.

Examples of the noble metals include platinum, palladium, rhodium, and the like. Examples of the alkaline metals include potassium, sodium, and the like. Examples of the alkaline-earth metals include barium and the like. Examples of the metal oxides include CeO₂, K₂O, ZrO₂, FeO₂, Fe₂O₃, CuO, CuO₂, Mn₂O₃, MnO, complex oxides indicated by a composition formula AₙB₁₋ₙCO₃ (in the formula, A is La, Nd, Sm, Eu, Gd or Y; B is an alkaline metal or alkaline-earth metal; C is Mn, Co, Fe or Ni; and 0≤n≤1), and the like.
The catalyst is supported on a honeycomb structured body used as a honeycomb filter to lower the burning temperature of PM in the regeneration process.

Before the catalyst is applied, an alumina film having a high specific surface area may be formed on the surface of a honeycomb structured body, and then the catalyst may be applied to the surface of this alumina film.

### BRIEF DESCRIPTION OF THE DRAWINGS

Fig. 1 (a) is a perspective view schematically illustrating a honeycomb structured body manufactured in the first embodiment of the present invention, and Fig. 1 (b) is an A-A line cross-sectional view of Fig. 1 (a); and
Fig. 2 is a graph for illustrating the relationship between the ratio of (MgO + SiO₂) in the aluminum titanate powdery materials and the bending strength of the honeycomb structured bodies manufactured in Examples 1 to 5 and Comparative Examples 2 and 3.

### EXPLANATION OF SYMBOLS

- 10: Honeycomb Structured Body
- 11: Cell
- 12: Plug
- 13: Cell Wall

## Claims

1. A method for manufacturing a honeycomb structured body comprising:
a molding step for forming a pillar-shaped honeycomb molded body having a large number of cells provided in parallel with one another in a longitudinal direction by molding a wet mixture containing an aluminum titanate powdery material containing ratios of 40 to 60% by mass of Al₂O₃, 30 to 50% by mass of TiO₂, and 1 to 15% by mass of (MgO + SiO₂); and
a firing step for firing said honeycomb molded body at a temperature of 1200°C to 1700°C.

2. The method for manufacturing a honeycomb structured body according to claim 1,
wherein
said aluminum titanate powdery material comprises:
a coarse powdery material of aluminum titanate having an average particle diameter of 3 to 50 µm; and
a fine powdery material of aluminum titanate having an average particle diameter of 0.1 to 3 µm.

3. The method for manufacturing a honeycomb structured body according to claim 1 or 2, further comprising a sealing step including filling either one end of each cell of said honeycomb molded body with a plug material paste to seal the cells.
